# EUROPEAN PATENT APPLICATION

(11) **EP 2 306 547 A1**
(43) Date of publication of application: **06.04.2011**
(21) Application number: 09425380.4
(22) Date of filing: 28.09.2009
(51) Int. Cl.: H01M 2/02, H01M 2/10

(54) **Insulating device for electronic instruments batteries**

(71) Applicant: Flying srl, 20121 Milaon (IT)
(72) Inventor: Modugno, Matteo, 21010 Ferno (VA) (IT)

(57) **Abstract**

The invention consists in a box made of insulating material that contains electronic mobile instrumentals batteries as mobile phones, notebooks and videocameras. The aim is to increase battery efficiency in the case of extreme temperatures. The insulating material is thin enough to allow the box to enter in the battery slot. Therefore there are two apertures that leave the terminals uncovered.

## Description

### Application field

The present invention concerns the storage batteries which feed electronic instruments, in particulary mobile electronic instruments as mobile phones, notebooks and videocameras. Typically these instruments can be used outdoor and are feed by rechargeable batteries, usually lithium ones. Lithium batteries are usually preferred because they are light and tend not to lose efficiency during the charging. Any way the present invention concerns both lithium and non lithium batteries.

The problem of the these mobile electronic instruments is that the batteries tend to lose efficiency in presence of extreme temperatures, that means too high temperatures or too low temperatures. Normally are used batteries tha can work in a range from -10 °C to 50 °C. More expensive batteries can work in lower and higher temperatures. In every case batteries tend to be less efficient the more temperatures tend to be extreme. The problem can be partial solved by using very expensive batteries or by using special insulating devices that coat all the electronic instruments. These devices are usually bulky and uneasy to use and to carry.

The pourpose of the present invention is to solve the problem by a device that is cheap and easy to use.

### Brief description

The invention consist in a box made of insulating material, the box coat the battery as an a dress. Therefore there are two openess in the box, this is to leave the electodes uncovered. The insulating device must have few decimillimeters tickness, this is because it must be put in the battery slot. The insulating material can retard the effects of extreme temperatures on battery efficiency and prevents battery deterioration.

### Brief description of the drawing

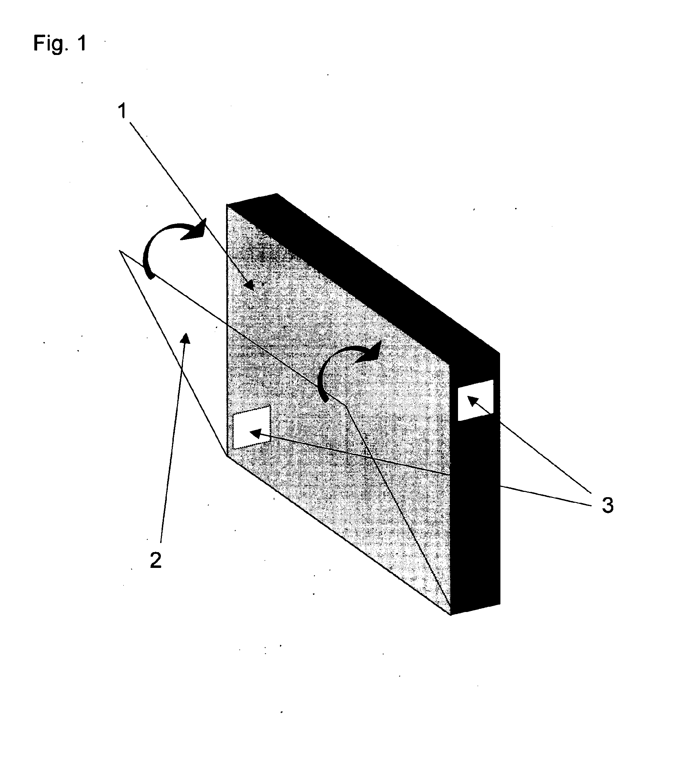

In fig. 1 is shown an embodiment of the insulating device.
Fig. 1(1): The insulating device or insulating box
Fig. 1(2): The shifting face of the box that can be opened and closed as a cap. It allows to put the battery in or to remove the battery very easily.
Fig. 1(3): The apertures wich allow the electrodes to be uncovered.

### Detailed description

At a first sight the insulating device seems a simple box, the box consist of insulating material and can fit perfectly battery 1. The shape of the box depends on the shape of the battery that must be coat. It'means that will be produced different insulating box according with the most common battery tha can be found in commerce (it happens for example with the devices used to contains mobile phones). The battery can easily put or removed thank the shifting face of the box 2. The tickness of the insulating material must be thin, not more than few decimillimeters, this is because the box must be put in the slot of the battery. There is no gripping mechanism to avoid any kind of tickness, the box remain closed for the fact istelf to be inserted in the battery slot. There are two apertures that leave the electrodes uncovered 3, obviously their position and shape depends on the kind of battery the box is designed for.

For what concerns the kind of insulating material, no specific materials is described in the present invention, the choice will be taken according to market preferences of prices and performances.

## Claims

1. A box made of insulating materials **charatcterized by the fact that** contains electronic mobile instrumens batteries, in order to increase efficiency of the batteries themselve in case of extreme temperatures.

2. A box made of insulating materials as described in claim 1, **charatcterized by the fact that** the tickness of the insulating materials is very thin, few decimiliimeters, in order to grant that the box could be put in the battery slot.

3. A box made of insulating materials as described in claim 1 and 2, **charatcterized by the fact that** there is a shifting face in order to put and remove the battery very easily, and two apertures in order to leave the electrodes uncovered.
